# EUROPÄISCHE PATENTANMELDUNG

(11) **EP 2 062 635 A1**
(43) Veröffentlichungstag der Anmeldung: **27.05.2009**
(21) Anmeldenummer: 08014599.8
(22) Anmeldetag: 18.08.2008
(51) Int. Cl.: B01D 46/04

(54) **Flexible Filteranordnung**

(30) Priorität: 23.11.2007 DE 202007016441 U
(71) Anmelder: L. B. Bohle Maschinen + Verfahren GmbH, 59320 Ennigerloh (DE)
(72) Erfinder: Bohle, Lorenz, 59320 Ennigerloh (DE)
(74) Vertreter: Habbel, Hans-Georg

(57) **Zusammenfassung**

Die Erfindung betrifft eine flexible Filteranordnung, wobei ein flexibles, gasdurchlässiges Filtermedium durch Gasimpulse eines Spülgases bewegt und dadurch gereinigt wird, ein in das Innere des Filtermediums reichendes Injektorrohr zur Zuführung des Spülgases vorgesehen ist und das Injektorrohr als ein durch einen Kolben verschließbarer Druckzylinder ausgebildet und der Kolben impulsweise betätigbar ist.

## Beschreibung

Die Erfindung bezieht sich auf eine flexible Filteranordnung gemäß dem Oberbegriff des Hauptanspruches.

In der DE 10 2004 007 279 B3 ist eine solche Filteranordnung beschrieben. Hierbei besteht die eigentliche Filteranordnung aus Stützstreben, an deren Außenseite ein flexibles Filtermedium angeordnet ist. Durch Führen eines Gasstromes auf die Außenseite des Filtermediums lagern sich an der Außenseite des Filtermediums die im Gasstrom enthaltenen Feststoffpartikel ab, wobei gleichzeitig das eigentliche flexible Filtermedium entsprechend verformt wird. Um ein Reinigen des Filtermediums zu erreichen, ist es durch diese Literaturstelle bekannt, einen Spülstrom stoßartig in das Innere der eigentlichen Filteranordnung zu führen, wodurch das flexible Filtermedium nach außen gewölbt wird und die sich an der Außenseite des Filtermediums angesammelten Feststoffpartikel abgeschleudert werden.

Bei der den Gattungsbegriff bildenden Einrichtung ist das Injektorrohr in der Höhe verstellbar und wird von einem Gasleitrohr zum Ansaugen von Prozessluft umgeben. Außerdem ist eine Umlenkvorrichtung vorgesehen, die zentrisch unter der Austrittsöffnung des Injektorrohres angeordnet ist und ein Umlenken des austretenden Spülgases auf die Innenfläche des Filtermediums bewirkt.

Der Erfindung liegt die Aufgabe zugrunde, die Wirkungsweise des Reinigens eines flexiblen Filtermediums noch zu verbessern, ohne dass hierfür höhere Kosten aufgewandt werden müssen.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt wird vorgeschlagen, dass das Injektorrohr selbst als Druckzylinder ausgebildet ist und durch einen Kolben verschlossen ist, der impulsweise geöffnet oder geschlossen werden kann. Das eigentliche Injektorrohr steht mit einer Hauptdruckleitung in Verbindung, an der mehrere Injektorrohre angeordnet sind, die zu einer Mehrzahl von Filterelementen führen. Auf diese Weise können die einzelnen Filterelemente impulsweise nacheinander gereinigt werden. Die Reinigung erfolgt dadurch, dass durch Freigabe der Austrittsöffnung des Injektorrohres, d. h. also dadurch, dass der Kolben die Austrittsöffnung des Injektorrores freigibt, der im Injektorrohr gespeicherte hohe Druck freigegeben wird und dadurch die Spülluft mit erheblichem Druck auf die Innenwand des Filterelementes geleitet wird. Hierbei ist es durchaus möglich, wie im Stand der Technik, dass das Injektorrohr heb- und senkbar ist, es kann aber genauso gut ortsfest innerhalb des Filtermediums angeordnet sein.

Der Kolben ist in dem Bereich außerhalb der Mündung des Injektorrohres kegelförmig ausgebildet, so dass dadurch eine Umlenkung des austretenden Luftstromes auftritt.

Der Kolben selbst liegt an der Unterseite des Injektorrohres unter Zwischenschaltung einer elastischen Dichtung an, so dass eine gute Abdichtung des im Inneren des Injektorrohres befindlichen Druckes möglich ist.

Ein Ausführungsbeispiel der Erfindung wird nachfolgend anhand der Zeichnung erläutert. Die Zeichnung zeigt dabei in
- Fig. 1: eine Ansicht auf das Injektorrohr ohne Filterelement und in
- Fig. 2: das Filterelement unter der Wirkung des Reinigungsluftstromes.

Die Erfindung geht von einer Einrichtung aus, wie sie beispielsweise in der deutschen Patentschrift 10 2004 007 279 B3 beschrieben ist, d. h. die eigentliche flexible Filteranordnung besteht im wesentlichen aus einer Rahmenanordnung, bei welcher an der Außenseite von Stützstäben ein flexibles Filtermedium angebracht ist. Dieses flexible Filtermedium wird im Betrieb mit Prozessluft beaufschlagt und dadurch lagern sich an der Außenseite des Filtermediums Feststoffpartikel ab.

In das Innere des Stützrahmens führt ein Injektorrohr, mit dem die Reinigungsluft oder das Reinigungsgas zugeführt wird. Durch die Verformung des Filtermediums erfolgt ein Abplatzen der angelagerten Feststoffpartikel.

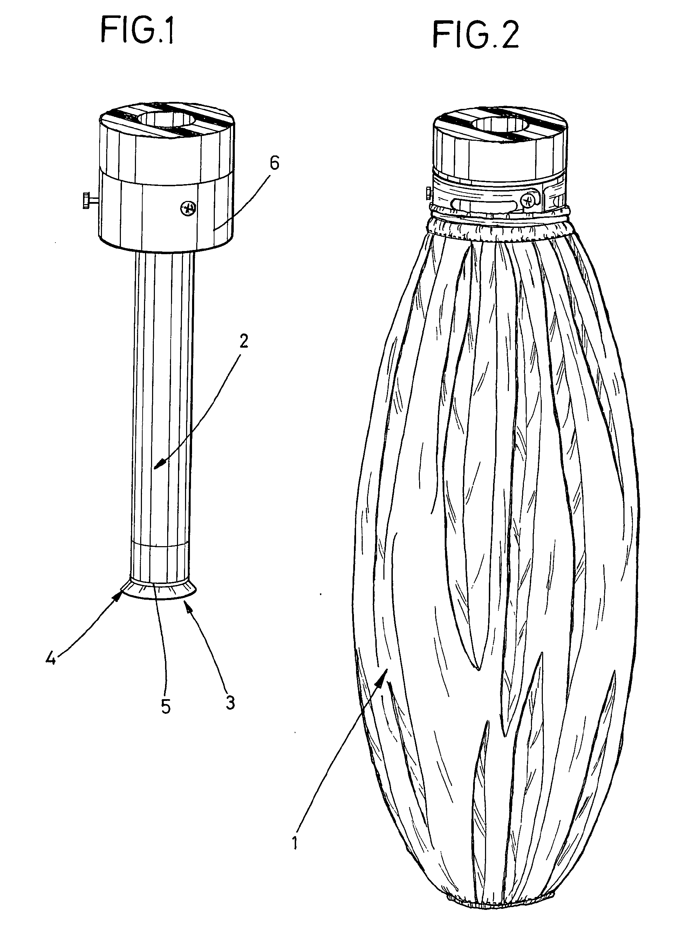

In Fig. 1 der vorliegenden Anmeldung ist ein Injektorrohr 2 dargestellt, das an einer Haltevorrichtung 6 befestigt ist und als Druckzylinder ausgebildet ist, wobei dieser Druckzylinder durch einen Kolben 3 verschlossen wird. An die Haltevorrichtung 6 schließt das in Fig. 2 erkennbare Filtermedium 1 an, das von außen von dem zu reinigenden Gas beströmt wird.

Der Kolben selbst schließt an die Öffnung des Injektorrohres 2 unter Zwischenschaltung einer Dichtung 5 an und die kegelförmige Ausbildung des Kolbens 3 außerhalb des Injektorrohres führt bei Öffnung der Ausströmöffnung des Injektorrohres 2 zu einer Umlenkung der austretenden Luft oder des austretenden Gases, so dass dieses auf die Innenseite des zu reinigenden Mediums gerichtet wird.

Durch kurzfristiges Öffnen und Schließen des Kolbens 3 und damit der Ausströmöffnung des Injektorrohres 2 werden Impulsströme geschaffen, die ein Abplatzen der angelagerten Verunreinigungen bewirken.

An einer entsprechenden Hauptdruckleitung, die in der Zeichnung nicht dargestellt ist, können mehrere Filterelemente 1 und Injektorrohre 2 angeordnet sein, die nacheinander durch Öffnen der Injektorrohre gereinigt werden können.

## Patentansprüche

1. Flexible Filteranordnung, wobei ein flexibles, gasdurchlässiges Filtermedium durch Gasimpulse eines Spülgases bewegt und dadurch gereinigt wird und ein in das Innere des Filtermediums reichendes Injektorrohr zur Zuführung des Spülgases vorgesehen ist, **dadurch gekennzeichnet, dass** das Injektorrohr (2) als ein durch einen Kolben (3) verschließbarer Druckzylinder ausgebildet und der Kolben (3) impulsweise betätigbar ist.

2. Flexible Filteranordnung nach Anspruch 1, **dadurch gekennzeichnet, dass** der Kolben (3) sich außerhalb des Injektorrohres (2) kegelförmig (bei 4) erweitert.

3. Flexible Filteranordnung nach Anspruch 1 oder 2, **dadurch gekennzeichnet, dass** der Kolben (3) mittels einer elastischen Dichtung (5) an der unteren Randkante des Injektorrohres (2) anliegt.

4. Flexible Filteranordnung nach einem oder mehreren der vorhergehenden Ansprüche, **dadurch gekennzeichnet, dass** mehrere Injektorrohre (2) an einer Hauptdruckleitung angeschlossen sind.
